# EUROPEAN PATENT APPLICATION

(11) **EP 4 668 205 A1**
(43) Date of publication of application: **24.12.2025**
(21) Application number: 25184250.6
(22) Date of filing: 20.06.2025
(51) Int. Cl.: G06T 1/20, G06T 7/00

(54) **METHOD OF DETERMINING FAULT IN IMAGE SIGNAL PROCESSOR AND IMAGE PROCESSING DEVICE FOR PERFORMING THE SAME**

(30) Priority: 20.06.2024 KR 20240080277; 07.08.2024 KR 20240105030
(71) Applicant: Nextchip Co., Ltd., Seongnam-si, Gyeonggi-do 13494 (KR)
(72) Inventor: KIM, Hyun Soo, 16846 Yongin-si (KR)
(74) Representative: Gill Jennings & Every LLP

(57) **Abstract**

A method of determining an image signal processor (ISP) fault performed by an image processing device is disclosed. The method includes generating a first partial raw image signal and a second partial raw image such that a split circuit includes each blending region, generating, by a first ISP, a first partial image based on the first partial raw image signal, generating, by a second ISP, a second partial image based on a second partial raw image signal, and determining, based on the first partial image and the second partial image, whether a fault occurs in an ISP group including the first ISP and the second ISP.

## Description

### CROSS-REFERENCE TO RELATED APPLICATION

This application claims the benefit of Korean Patent Application No. 10-2024-0080277, filed on June 20, 2024, and Korean Patent Application No. 10-2024-0105030, filed on August 7, 2024, in the Korean Intellectual Property Office, the entire disclosure of which is incorporated herein by reference for all purposes.

### BACKGROUND

### 1. Field of the Invention

One or more embodiments relate to a technique for processing an image signal, and more particularly, to a technique for processing a raw image signal using a plurality of image signal processors (ISPs).

### 2. Description of the Related Art

An image signal processor (ISP) may generate an image by receiving and processing a raw image signal captured by an image sensor of a camera. The image generated by the ISP may be output on a display or used for an additional function. For example, an image generated based on a raw image signal obtained by a camera mounted on a vehicle may be transmitted to an engine control unit (ECU) or a vehicle control unit (VCU) of the vehicle and used for the functions of advanced driver assistance systems (ADAS). When a fault occurs in an ISP, an image generated by the ISP may also be inaccurate, causing an issue with ADAS functions that rely on the inaccurate image.

### SUMMARY

Embodiments provide a method of transmitting at least a portion of a raw image signal to each of a plurality of image signal processors (ISPs) of an image processing device.

Embodiments provide a method of detecting a fault occurring in at least one of the plurality of ISPs.

However, technical aspects are not limited to the foregoing aspects, and there may be other technical aspects.

According to an aspect, there is provided a method of determining an ISP fault, performed by an image processing device, the method including receiving, by a split circuit, a first raw image signal that is at least a portion of an image signal captured by an image sensor of a first camera, determining, by the split circuit, a blending region for the first raw image signal, transmitting, by the split circuit, a first partial raw image signal of the first raw image signal to a first ISP, the first partial raw image signal corresponding to a first region including the blending region, transmitting, by the split circuit, a second partial raw image signal of the first raw image signal to a second ISP, the second partial raw image signal corresponding to a second region including the blending region, generating, by the first ISP, a first partial image by processing the first partial raw image signal, generating, by the second ISP, a second partial image by processing the second partial raw image signal, and determining, by a fault detection circuit, based on a first common image corresponding to the blending region of the first partial image and a second common image corresponding to the blending region of the second partial image, whether a fault occurs in an ISP group including the first ISP and the second ISP.

The determining of whether the fault occurs in the ISP group may include obtaining the first common image by excluding, from the blending region, pixels corresponding to a first boundary region of the blending region in the first partial image, obtaining the second common image by excluding, from the blending region, pixels corresponding to a second boundary region of the blending region in the second partial image, and based on the first common image and the second common image, determining whether a fault occurs in the ISP group.

The obtaining of the first common image by excluding, from the blending region, the pixels corresponding to the first boundary region of the blending region in the first partial image may include obtaining a first clock signal generated to correspond to a region in which the pixels corresponding to the first boundary region of the blending region are excluded from the blending region and based on the first clock signal, obtaining the first common image.

The determining of whether the fault occurs in the ISP group may include obtaining a first pixel for the first common image at a first timepoint, obtaining a second pixel for the second common image at the first timepoint, and based on the first pixel and the second pixel, determining whether the fault occurs in the ISP group.

The determining of whether the fault occurs in the ISP group may include obtaining first pixels for the first common image, obtaining a first cyclic redundancy check (CRC) code for the first pixels, obtaining second pixels for the second common image, obtaining a second CRC code for the second pixels, and based on the first CRC code and the second CRC code, determining whether the fault occurs in the ISP group.

The determining of whether the fault occurs in the ISP group may include obtaining first pixels for the first common image at a first timepoint, storing the first pixels in a line buffer, obtaining second pixels for the second common image at a second timepoint, and based on the first pixels and the second pixels, determining whether the fault occurs in the ISP group.

The determining of whether the fault occurs in the ISP group may include obtaining, by the fault detection circuit, set values of the first ISP and set values of the second ISP and determining, by the fault detection circuit, based on the first common image, the second common image, the set values of the first ISP, and the set values of the second ISP, whether the fault occurs in the ISP group.

The method may further include transmitting, by the split circuit, a third partial raw image signal of the first raw image signal to a third ISP, the third partial raw image signal corresponding to a third region including the blending region and generating, by the third ISP, a third partial image by processing the third partial raw image signal, and wherein the determining of whether the fault occurs in the ISP group may include determining, by the fault detection circuit, based on a first common image corresponding to the blending region of the first partial image, a second common image corresponding to the blending region of the second partial image, and a third common image corresponding to the blending region of the third partial image, whether the fault occurs in the ISP group.

The determining of whether the fault occurs in the ISP group, by the fault detection circuit, based on the first common image, the second common image, and the third common image may include based on the first common image, the second common image, and the third common image, determining a fault image and determining an ISP that generates the fault image as an ISP in which a fault occurs.

The method may further include, when the third ISP is determined as the ISP in which the fault occurs, transmitting, by the split circuit, a first partial raw image signal of the first raw image signal to the first ISP, the first partial raw image signal corresponding to at least a portion of the first region and the third region and transmitting, by the split circuit, a second partial raw image signal of the first raw image signal to the second ISP, the second partial raw image signal corresponding to at least a portion of the second region and the third region.

A size of the blending region for the first raw image signal may be different from a size of a previous blending region for a previous raw image signal.

The method may further include obtaining, by a merge circuit, the first partial image and the second partial image and generating, by the merge circuit, based on the first partial image and the second partial image, a first image corresponding to the first raw image signal.

The method may further include, when it is determined that a fault occurs in the ISP group, transmitting, by the fault detection circuit, a signal that stops an operation of generating the first image to the merge circuit.

According to another aspect, there is provided an image processing device including a split circuit configured to receive a first raw image signal that is at least a portion of an image signal captured by an image sensor of a first camera, determine a blending region for the first raw image signal, transmit a first partial raw image signal of the first raw image signal to a first ISP, the first partial raw image signal corresponding to a first region including the blending region, and transmit a second partial raw image signal of the first raw image signal to a second ISP, the second partial raw image signal corresponding to a second region including the blending region, the first ISP configured to generate a first partial image by processing the first partial raw image signal, the second ISP configured to generate a second partial image by processing the second partial raw image signal, and a fault detection circuit configured to determine whether a fault occurs in an ISP group including the first ISP and the second ISP, based on a first common image corresponding to the blending region of the first partial image and a second common image corresponding to the blending region of the second partial image.

The split circuit may be configured to bypass, to at least one of the first ISP or the second ISP, each of samples included in at least one line among a plurality of lines included in the first raw image signal, based on a horizontal synchronization signal.

The fault detection circuit may be configured to store a first line of the first common image and a second line of the second common image by using a line buffer and determine, based on the first line and the second line, whether a fault occurs in the ISP group.

The image processing device may further include a merge circuit configured to generate, based on the first partial image and the second partial image, a first image corresponding to the first raw image signal.

The image processing device may include a third ISP configured to generate a third partial image by processing a third partial raw image signal, wherein the split circuit may be configured to transmit the third partial raw image signal of the first raw image signal to the third ISP, the third partial raw image signal corresponding to a third region including at least a portion of the blending region, and wherein the fault detection circuit may be configured to determine, based on a first common image corresponding to the blending region of a first partial image, a second common image corresponding to the blending region of the second partial image, and a third common image corresponding to the blending region of the third partial image, whether a fault occurs in the ISP group including the first ISP, the second ISP, and the third ISP.

According to another aspect, there is provided an image processing device including a split circuit configured to receive a first raw image signal that is at least a portion of an image signal captured by an image sensor of a first camera, determine a blending region for the first raw image signal, transmit a first partial raw image signal of the first raw image signal to a first image signal processor (ISP), the first partial raw image signal corresponding to a first region including the blending region, and transmit a second partial raw image signal of the first raw image signal to a second ISP, the second partial raw image signal corresponding to a second region including the blending region, the first ISP configured to generate a first partial image by processing the first partial raw image signal, the second ISP configured to generate a second partial image by processing the second partial raw image signal, a merge circuit configured to generate, based on the first partial image and the second partial image, a first image corresponding to the first raw image signal, and a fault detection circuit configured to determine, based on a first common image corresponding to the blending region in the first partial image and a second common image corresponding to the blending region in the second partial image, whether a fault occurs in an ISP group including the first ISP and the second ISP.

Additional aspects of embodiments will be set forth in part in the description which follows and, in part, will be apparent from the description, or may be learned by practice of the disclosure.

According to at least one of the embodiments of the present disclosure, an image processing device including a plurality of ISPs that may process at least a portion of a raw image signal in real time may be provided.

According to at least one of the embodiments of the present disclosure, a method of detecting a fault occurring in at least one of the plurality of ISPs may be provided by comparing an overlapping region in an image generated by each of the plurality of ISPs of the image processing device.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a configuration of an image signal processing system according to an embodiment;
FIG. 2 is a configuration of an image processing device according to an embodiment;
FIG. 3 is a flowchart of a method of detecting an image signal processor (ISP) fault, according to an embodiment;
FIG. 4 illustrates an operation of a split circuit according to an embodiment;
FIG. 5 illustrates operations of a first ISP and a second ISP, according to an embodiment;
FIG. 6 is a flowchart of a method of generating an image, according to an embodiment;
FIG. 7 illustrates an operation of a merge circuit according to an embodiment;
FIG. 8 is a flowchart of a method of determining whether a fault occurs in an ISP group, according to an embodiment;
FIG. 9 illustrates an operation of a fault detection circuit according to an embodiment;
FIG. 10 is a flowchart of a method by which a fault detection circuit obtains a common image, according to an embodiment;
FIG. 11 is a flowchart of a method of determining, based on a pixel obtained at the same timepoint, whether a fault occurs in an ISP group, according to an embodiment;
FIG. 12 illustrates a flow of a first partial image, a first common image, a second partial image, and a second common image, according to an embodiment;
FIG. 13 is a flowchart of a method of determining, based on a cyclic redundancy check (CRC) code, whether a fault occurs in an ISP group, according to an embodiment;
FIG. 14 illustrates a flow of a first partial image, a first common image, a second partial image, and a second common image, according to an embodiment;
FIG. 15 is a flowchart of a method of determining whether a fault occurs in an ISP group using a line buffer, according to an embodiment;
FIG. 16 is a flow of a first partial image, a first common image, a second partial image, a second common image, and a buffer output image, according to an embodiment;
FIG. 17 is a flowchart of a method of determining, based on set values of a plurality of ISPs, whether a fault occurs in an ISP group, according to an embodiment;
FIG. 18 is a flowchart of a method of detecting an ISP fault, performed by an image processing device including three or more ISPs, according to an embodiment;
FIG. 19 is a flowchart of a method of controlling an operation of a split circuit depending on whether a fault occurs in a third ISP, according to an embodiment; and
FIG. 20 is a flowchart of a method of controlling an operation of a merge circuit depending on whether a fault occurs in an ISP group, according to an embodiment.

### DETAILED DESCRIPTION

Hereinafter, example embodiments will be described in detail with reference to the accompanying drawings. However, various alterations and modifications may be made to the example embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one component from another component, and the nature, the sequences, or the orders of the components are not limited by the terms. When one component is described as being "connected", "coupled", or "attached" to another component, it should be understood that one component may be connected or attached directly to another component, and an intervening component may also be "connected", "coupled", or "attached" to the components.

The same name may be used to describe an element included in the embodiments described above and an element having a common function. Unless stated otherwise, the description of an embodiment may be applicable to other embodiments, and a repeated description related thereto is omitted.

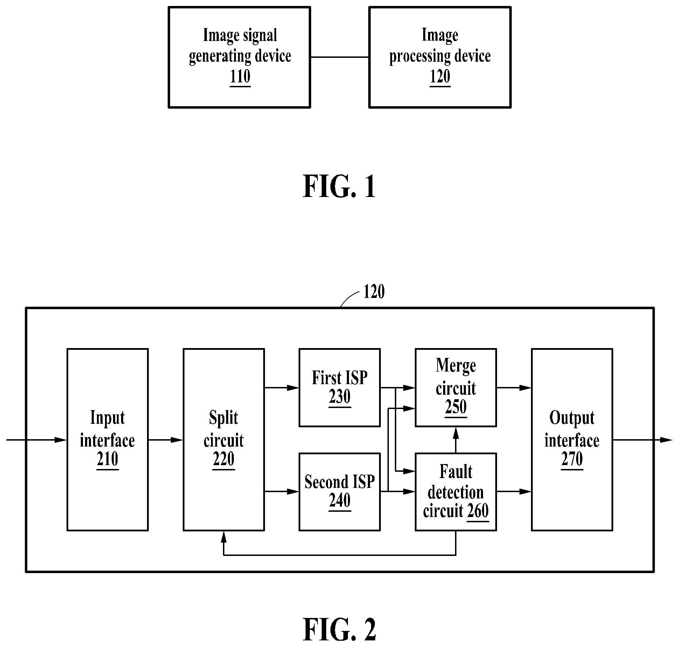

FIG. 1 is a configuration of an image signal processing system according to an embodiment.

According to an embodiment, the image signal processing system may include an image signal generating device 110 and an image processing device 120.

The image signal generating device 110 may generate a raw image signal through an image sensor that may obtain information about an external environment. For example, the image signal generating device 110 may include a camera and generate a signal captured by an image sensor of the camera as the raw image signal.

The image sensor of the image signal generating device 110 may receive light from the outside, divide the color of the received light through a color filter array (CFA), and generate an analog signal for the light received from the outside by detecting the intensity of the light for the divided colors through photodiodes. For example, a pattern of a CFA included in the image generating device 110 may be a Bayer pattern, a red-green-blue-infrared (RGBIR) pattern, a red-clear-clear-blue (RCCB) pattern, a red-yellow-yellow-cyan (RYYCy) pattern, or the like.

According to an embodiment, the image signal generating device 110 may transmit, to the image processing device 120, the analog signal for the light received from the outside as a raw image signal. The raw image signal may include analog signals of a plurality of lines (e.g., horizontal lines) corresponding to a photodiode array of the image sensor.

The image signal generating device 110 may transmit, to the image processing device 120, the raw image signal, which is the analog signal, through a coaxial cable. When the coaxial cable is used to transmit a signal, data transmission utilizing a high bandwidth may be possible, and signal interference may be minimized.

According to an embodiment, the image signal generating device 110 may include a plurality of cameras. For example, image sensors respectively included in the plurality of cameras may include different CFA patterns. As the same scene is captured by cameras having different CFA patterns, visual information required for a predetermined situation may be smoothly obtained. For example, in a dark environment, an image generated by a first CFA pattern based on IR may be used to detect an object rather than an image generated by a first CFA pattern based on RGB.

According to an embodiment, the image signal processing system may include a plurality of image signal generating devices 110. For example, a first image signal generating device may be connected to the image processing device 120 through a first coaxial cable, and a second image signal generating device may be connected to the image processing device 120 through a second coaxial cable. Each of the plurality of image signal generating devices 110 may generate a raw image signal and transmit the generated raw image signal to the image processing device 120.

FIG. 2 is a configuration of an image processing device according to an embodiment.

According to an embodiment, the image processing device 120 may include an input interface 210, a split circuit 220, a first ISP 230, a second ISP 240, a merge circuit 250, a fault detection circuit 260, and an output interface 270.

The input interface 210 may be connected to an external device and transmit and receive data to and from the external device. Hereinafter, transmitting and receiving "A" may refer to transmitting and receiving "information or data indicating A".

The input interface 210 may be implemented as circuitry in the image processing device 120. For example, the input interface 210 may include an internal bus and an external bus. In another example, the input interface 210 may be an element that connects the image processing device 120 to an external device. The input interface 210 may be connected to the image signal generating device 110 through a coaxial cable. The input interface 210 may receive data from an external device and transmit the data to the split circuit 220, the first ISP 230, the second ISP 240, the merge circuit 250, the fault detection circuit 260, and the output interface 270.

The input interface 210 may transmit, to the split circuit 220, the raw image signal received from the image signal generating device 110.

The arrows illustrated in FIG. 2 shown only a portion of a flow of signal processing performed by the image processing device 120, and connections among components of the image processing device 120 and a flow of signal processing are not limited to the arrows illustrated in FIG. 2. For example, the input interface 210 may be connected to the first ISP 230 and bypass the split circuit 220.

When the image processing device 120 is required to process a large number of raw image signals in real time, the image processing device 120 may use a plurality of ISPs (e.g., 230 and 240) simultaneously to process the raw image signals. When the image processing device 120 includes the plurality of ISPs (e.g., 230 and 240), the split circuit 220 may be used to distinguish between partial raw image signals to be processed by each of the ISPs (e.g., 230 or 240).

The split circuit 220 may generate, based on a received first raw image signal, a first partial raw image signal and a second partial raw image signal. The first raw image signal may be a signal that may be received by the split circuit 220 through a signal operation clock input to the split circuit 220.

According to an embodiment, the first raw image signal may be an image signal, among raw image signals, that the split circuit 220 may temporarily store within the capacity of the split circuit 220. For example, when the split circuit 220 includes a line buffer, the first raw image signal may be at least a portion of a raw image signal corresponding to the size of the line buffer of the split circuit 220.

Each of the first ISP 230 and the second ISP 240 is an ISP and may process data (e.g., a partial raw image signal) received from the split circuit 220 and data stored in a memory. A "processor" may be a data processing device implemented by hardware including a circuit having a physical structure to perform desired operations. The desired operations may include, for example, code or instructions in a program. For example, the hardware-implemented data processing device may include a microprocessor, a central processing unit (CPU), a processor core, a multi-core processor, a multiprocessor, an application-specific integrated circuit (ASIC), and a field-programmable gate array (FPGA).

Each of the first ISP 230 and the second ISP 240 may execute computer-readable code (e.g., software) stored in the memory and instructions triggered by any one of processors included in the image processing device 120.

Each of the first ISP 230 and the second ISP 240 may generate an image by processing a raw image signal or a partial raw image signal. For example, each of the first ISP 230 and the second ISP 240 may generate an image having RGB or YUV color space by processing a raw image signal. The first ISP 230 may generate a first partial image by processing a first partial raw image signal. The second ISP 240 may generate a second partial image by processing a second partial raw image signal.

According to an embodiment, each of the first ISP 230 and the second ISP 240 may process a raw image signal generated to correspond to each of image sensors including different CFA patterns. When the first ISP 230 (and/or the second ISP 240) has a multi-CFA processing function that may process various CFA patterns regardless of a predetermined CFA pattern of a camera, the image processing device 120 may generate an image that is suitable for a predetermined situation by processing a raw image signal generated by the image signal generating device 110 regardless of a CFA pattern of the camera.

The merge circuit 250 may obtain the first partial image from the first ISP 230, obtain the second partial image from the second ISP 240, and generate, based on the first partial image and the second partial image, a first image corresponding to the first raw image signal. When there is no need to merge partial images, the merge circuit 250 may be bypassed.

According to an embodiment, the merge circuit 250 may determine a value of a pixel determined in the first partial image or the second partial image as a pixel value of the first image for a region in which the first partial image and the second partial image do not overlap each other and determine the pixel value of the first image by performing weighted summation of a value of a pixel determined in a portion of the first partial image and a value of a pixel determined in a portion of the second partial image for a blending region in which the first partial image and the second partial image partially overlap each other.

The fault detection circuit 260 may determine whether a fault occurs in an ISP group including a plurality of ISPs of the image processing device 120. For example, the fault detection circuit 260 may detect, based on the first partial image generated by the first ISP 230 and the second partial image generated by the second ISP 240, whether a fault occurs in the first ISP 230 and/or the second ISP 240.

According to an embodiment, the fault detection circuit 260 may obtain a first common image that includes at least a portion of a region of the first partial image that overlaps the second partial image, obtain a second common image that includes at least a portion of a region of the second partial image that overlaps the first partial image, and determine, based on the first common image and the second common image, whether a fault occurs in the ISP group including the first ISP 230 and the second ISP 240.

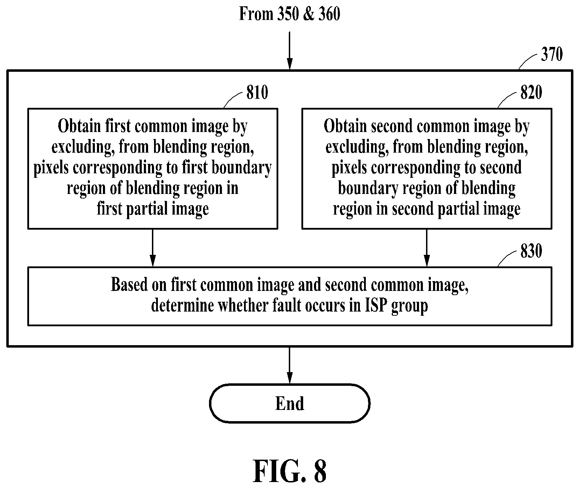

A method by which the image processing device 120 determines a fault in an ISP using the fault detection circuit 260 is described in detail below with reference to FIGS. 8 to 20.

According to an embodiment, when it is determined that a fault occurs in the ISP group, the fault detection circuit 260 may transmit, to the merge circuit 250, a signal that stops an operation of generating a first image. When receiving the stop signal, the image processing device 120 may stop image generation.

According to an embodiment, when it is determined that a fault occurs in the ISP group, the fault detection circuit 260 may transmit, to the output interface 270, a signal indicating that a fault occurs in the ISP group. For example, when the first image output from the image processing device 120 is used for the advanced driver-assistance systems (ADAS) functionality of a vehicle, the fault detection circuit 260 may transmit a signal that stops the use of the ADAS functionality based on the first image to an external device through the output interface 270. For example, the external device may be an engine control unit (ECU) or a vehicle control unit (VCU), but embodiments are not limited thereto.

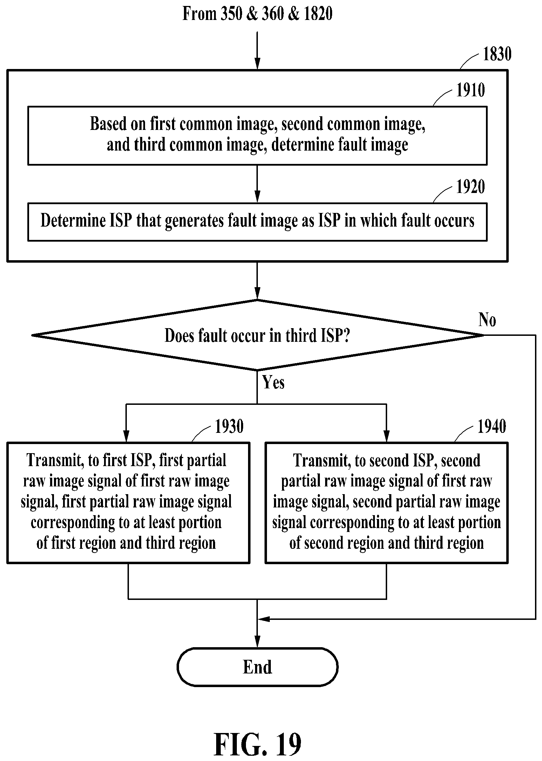

According to an embodiment, when an ISP within the ISP group in which a fault occurs is identified, the fault detection circuit 260 may transmit information about the ISP in which the fault occurs or normally operating ISPs to the split circuit 220. The split circuit 220 may redetermine a first region and a second region respectively corresponding to the normally operating ISPs, excluding the ISP in which a fault occurs from the ISP group. As a raw image signal received by the image processing device 120 is redistributed to the normally operating ISPs, an image corresponding to the raw image signal may be generated. For example, when the amount of data (or samples) in the raw image signal exceeds the amount of data that the normally operating ISPs may process, the split circuit 220 may reduce the resolution of the raw image signal and generate a first partial raw image signal and a second partial raw image signal for the reduced-resolution raw image signal. The operation of the split circuit 220 when it is determined that a fault occurs in the ISP group is described in detail below with reference to FIG. 19.

The output interface 270 may be connected to an external device to transmit and receive data to and from the external device. For example, the output interface 270 may be connected to a display. For example, the output interface 270 may be connected to an additional processor, such as an ECU or a VCU of a vehicle. For example, the ECU or the VCU may use a received first image to perform the ADAS functionality. According to an embodiment, the output interface 270 may include a plurality of output terminals that are respectively connected to a plurality of external devices.

The output interface 270 may be implemented as a network within the image processing device 120. For example, the output interface 270 may include an internal bus and an external bus. In another example, the output interface 270 may be an element that connects the image processing device 120 to an external device.

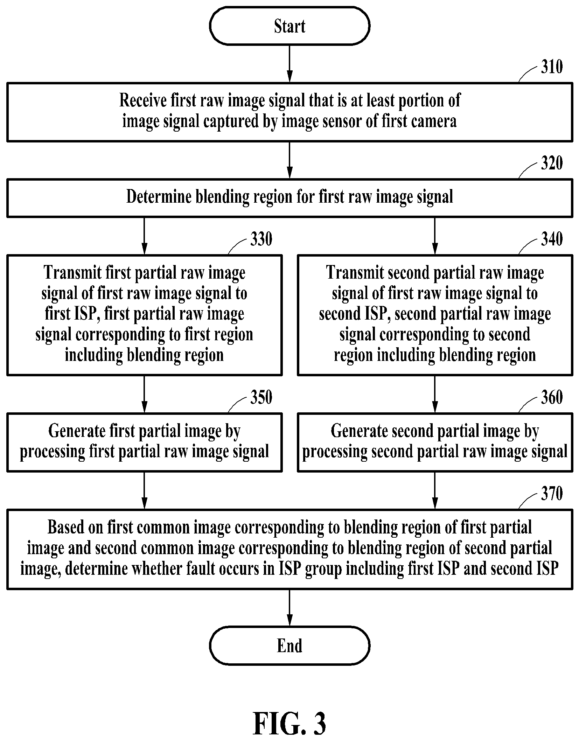

FIG. 3 is a flowchart of a method of detecting an ISP fault, according to an embodiment.

Operations 310 to 370 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2).

In operation 310, the split circuit may receive a first raw image signal, which is at least a portion of an image signal captured by an image sensor of a first camera. For example, the split circuit may receive the first raw image signal through the input interface.

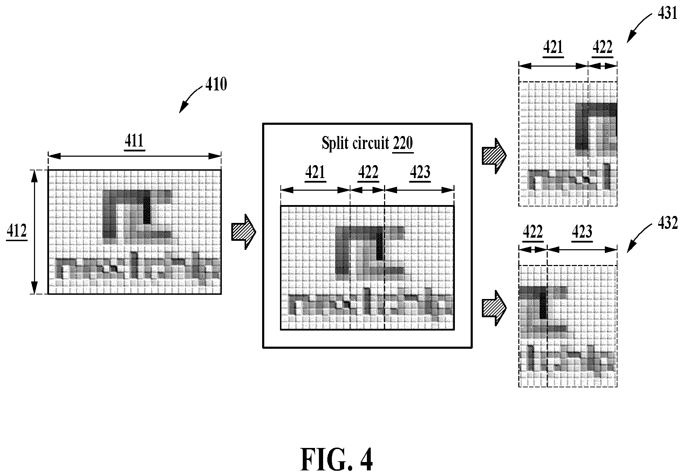

In operation 320, the split circuit may determine a first region (e.g., a first region 431 of FIG. 4), a second region (e.g., a second region 432 of FIG. 4), and a blending region for the first raw image signal. The first region may be a region that is to be transmitted to the first ISP among regions represented by the first raw image signal. The second region may be a region that is to be transmitted to the second ISP among the regions represented by the first raw image signal. The blending region may be an overlapping (or redundant) region between the first region and the second region.

The split circuit may determine the sizes of the first region and the second region by considering the capacity of a raw image signal that each of the plurality of ISPs in the image processing device may process in real time.

According to an embodiment, the size of the blending region for the first raw image signal may differ from the size of a previous blending region for a previous raw image signal. For example, when the raw image signal is a t frame, the previous raw image signal may be a t-1 frame. The size of the blending region for the first raw image signal may be independently determined for each frame represented by the first raw image signal. For example, the size of the blending region may be determined as a first size for a first frame and as a second size for a second frame. The first size may be identical to or different from the second size.

In operation 330, the split circuit may transmit, to the first ISP, a first partial raw image signal of the first raw image signal, the first partial raw image corresponding to the first region including the blending region.

In operation 340, the split circuit may transmit, to the second ISP, a second partial raw image signal of the second raw image signal, the second partial raw image signal corresponding to the second region including the blending region.

In operation 350, the first ISP may generate a first partial image by processing the first partial raw image signal. For example, the first ISP may process the first partial raw image signal to generate the first partial image with an RGB or YUV color space.

In operation 360, the second ISP may generate a second partial image by processing the second partial raw image signal.

Through the image signal processing method of operations 310 to 360, the image processing device may divide the first raw image signal into the first partial raw image signal and the second partial raw image signal and process in real time the first raw image signal that exceeds the capacity that a single ISP may handle by transmitting the divided first partial raw image signal and second partial raw image signal to the first ISP and the second ISP, respectively.

In operation 370, the fault detection circuit may determine whether a fault occurs in the ISP group including the first ISP and the second ISP, based on a first common image corresponding to the blending region of the first partial image and a second common image corresponding to the blending region of the second partial image. The method by which the fault detection circuit determines whether a fault occurs in the ISP group is described in detail below with reference to FIGS. 8 to 17.

FIG. 4 illustrates an operation of a split circuit according to an embodiment;

The split circuit may determine the first region 431, the second region 432, and a blending region for a first raw image signal.

A region 410 represented by the first raw image signal may have a size defined by a first horizontal length 411 and a first vertical length 412. When the first raw image signal is input to the split circuit, the split circuit may determine a first partial horizontal length 421, a second partial horizontal length 422, and a third partial horizontal length 423. The first region 431 may be a region corresponding to the first partial horizontal length 421 and the second partial horizontal length 422 within the region 410 represented by the first raw image signal. The second region 432 may be a region corresponding to the second partial horizontal length 422 and the third partial horizontal length 423 within the region 410 represented by the first raw image signal. The blending region may be a region corresponding to the second partial horizontal length 422 within the region 410 represented by the first raw image signal. The blending region may be commonly included in the first region 431 and the second region 432.

The split circuit may transmit, to a first ISP, a first partial raw image signal of the first raw image signal, the first partial raw image signal corresponding to the first region 431 including the blending region and transmit, to a second ISP, a second partial raw image signal of the second raw image signal, the second partial raw image signal corresponding to the second region 432 including the blending region.

The total horizontal length of the first region 431, which includes the first partial horizontal length 421 and the second partial horizontal length 422, may vary depending on the data processing capability of the first ISP. For example, when the resolution of the first raw image signal is 3840 x 2160 (i.e., ultra-high definition (UHD) or 4K) and the data processing capability of the first ISP is 2560 x 1440 (i.e., Quad HD), a portion of the first raw image signal may be determined as the first partial raw image signal in accordance with the data processing capability of the first ISP.

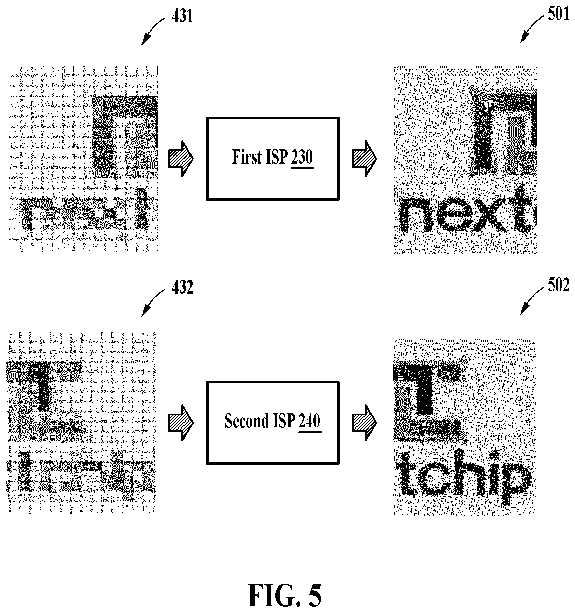

FIG. 5 illustrates operations of a first ISP and a second ISP, according to an embodiment.

The first ISP 230 may generate a first partial image 501 by processing a first partial raw image signal. The first partial raw image signal may correspond to the first region 431 of the first raw image signal. For example, the first ISP 230 may generate a first partial image 501 with an RGB or YUV color space by processing the first partial raw image signal. The first ISP 230 may transmit the generated first partial image 501 to a merge circuit.

The second ISP 240 may generate a second partial image 502 by processing a second partial raw image signal. The second partial raw image signal may correspond to the second region 432 of the first raw image signal. The second ISP 240 may transmit the generated second partial image 502 to the merge circuit.

The first ISP 230 and the second ISP 240 may receive the first partial raw image signal and the second partial raw image signal, respectively, and generate the first partial image 501 and the second partial image 502 by performing an image processing task such as demosaicing. Even when an image processing device includes three or more ISPs, the operations of the first ISP 230 and the second ISP 240 may be similarly modified and applied to each ISP.

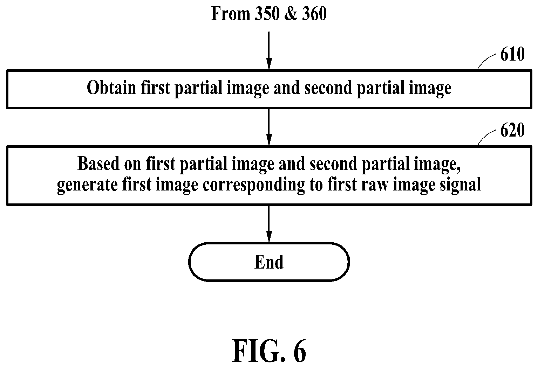

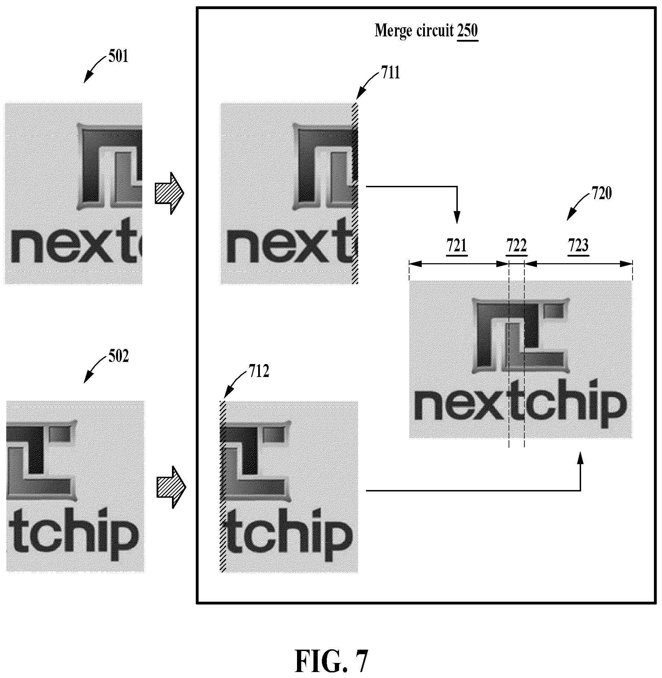

FIG. 6 is a flowchart of a method of generating an image, according to an embodiment. FIG. 7 illustrates an operation of a merge circuit according to an embodiment.

According to an embodiment, operations 610 and 620 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operations 610 and 620 may be performed after operations 350 and 360 described above with reference to FIG. 3 are performed.

In operation 610, the merge circuit may obtain a first partial image and a second partial image.

In operation 620, the merge circuit may generate a first image 720 corresponding to a first raw image signal based on the first partial image 501 and the second partial image 502. For example, when there is no blending region, the merge circuit may generate the first image 720 by arranging the first partial image 501 and the second partial image 502 to correspond to the positions of first and second regions. For example, when there is a blending region, the merge circuit may generate the first image 720 by arranging the first partial image 501 and the second partial image 502 to correspond to the positions of the first and second regions and determining a value of a pixel of the blending region based on a value of a pixel corresponding to the blending region of the first partial image 501 and a value of a pixel corresponding to the blending region of the second partial image 502.

According to an embodiment, the merge circuit may exclude pixels corresponding to a first boundary region 711 of the blending region from the first partial image 501 and exclude pixels corresponding to a second boundary region 712 of the blending region from the second partial image 502. The first boundary region 711 may be a region corresponding to a predetermined number of pixels at an end of the blending region in the first partial image 501. The second boundary region 712 may be a region corresponding to a predetermined number of pixels at an end of the blending region in the second partial image 502. For example, the first boundary region 711 and the second boundary region 712 may each be a region of 16 pixels in the horizontal direction at the end of the blending region in the first partial image 501 and the second partial image 502, respectively.

When a partial image is generated based on a partial raw image signal by the first ISP and the second ISP, a value of a pixel related to a first point of the partial image may reflect values of samples of points adjacent to the first point. However, when an image related to a boundary region in a blending region of the partial image is generated, some values of samples related to points adjacent to the boundary region may be lost during the generation process of the partial raw image signal. As a result, the boundary region may include an inaccurate image. As pixels corresponding to the first boundary region 711 and the second boundary region 712 are removed from the first partial image 501 and the second partial image 502, respectively, values of inaccurate pixels may be excluded from the first image.

According to an embodiment, the merge circuit may obtain values of third pixels corresponding to the blending region in the first image 720 by performing weighted summation of values of first pixels corresponding to the blending region in the first partial image 501 and values of second pixels corresponding to the blending region in the second partial image 502. For example, each of the values of the third pixels may be the average of the value of a first pixel and the value of a second pixel corresponding to the position of each third pixel.

Referring to FIG. 7, the merge circuit may generate the first image 720 based on the first partial image 501 and the second partial image 502. The merge circuit may remove the first boundary region 711 from the first partial image 501 and the second boundary region 712 from the second partial image 502. The merge circuit may generate the first image 720 based on the first partial image 501 with the first boundary region 711 removed and the second partial image 502 with the second boundary region 712 removed.

The values of the pixels of a first image region 721 in which a corresponding region of the first image 720 exists only in the first partial image 501 may be determined as the values of the pixels of the first partial image 501. The values of the pixels of a second image region 722 corresponding to a blending region in which a corresponding region of the first image 720 exists in both the first partial image 501 and the second partial image 502 may be determined by performing weighted summation of the values of the pixels of the first partial image 501 and the values of the pixels of the second partial image 502. The values of the pixels of a third image region 723 in which a corresponding region of the first image 720 exists only in the second partial image 502 may be determined as the values of the pixels of the second partial image 502.

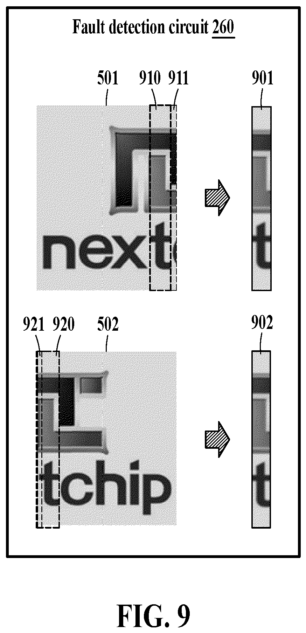

FIG. 8 is a flowchart of a method of determining whether a fault occurs in an ISP group, according to an embodiment. FIG. 9 illustrates an operation of a fault detection circuit according to an embodiment.

According to an embodiment, operations 810 to 830 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 370 described above with reference to FIG. 3 may include operations 810 to 830.

In operation 810, the fault detection circuit may obtain a first common image 901 by excluding pixels corresponding to a first boundary region 911 of a blending region 910 in a first partial image from the blending region 910. The first boundary region 911 may correspond to a region corresponding to a predetermined number of pixels at an end of a blending region in the first partial image 501. For example, the first boundary region 911 may correspond to a region corresponding to 16 pixels in the horizontal direction at the end of the blending region of the first partial image 501.

In operation 820, the fault detection circuit may obtain a second common image 902 by excluding pixels corresponding to a second boundary region 921 of a blending region 920 in a second partial image from the blending region 920. The second boundary region 921 may be a region corresponding to a predetermined number of pixels at the blending region in the second partial image 502. For example, the second boundary region 921 may correspond to a region corresponding to 16 pixels in the horizontal direction at the end of the blending region of the second partial image 502.

The sizes of the first boundary region 911 and the second boundary region 921 may be set differently from the sizes of the first boundary region 711 and the second boundary region 712 described above with reference to FIG. 7.

In operation 830, the fault detection circuit may determine whether a fault occurs in the ISP group based on the first common image 901 and the second common image 902. Since the first common image 901 and the second common image 902 are images respectively generated by the first ISP and the second ISP in response to the same raw image signal, the fault detection circuit may detect that a fault occurs in at least one of the first ISP or the second ISP when consistency between the first common image 901 and the second common image 902 is not observed.

The consistency between the first common image 901 and the second common image 902 may be determined by comparing the values of a plurality of first pixels included in the first common image 901 with the values of a plurality of second pixels included in the second common image 902 that correspond to the first pixels. For example, when the difference between the value of a first pixel and the value of a second pixel corresponding to the first pixel is within a preset range, it may be determined that the first pixel is the same as the second pixel. For example, the consistency between the first common image 901 and the second common image 902 may be the proportion of pairs of first pixels and second pixels that are identical among pairs of first pixels and second pixels that correspond to each other. For example, when the proportion of pairs of first and second pixels that are identical among pairs of first and second pixels is less than or equal to a preset threshold value, it may be determined that consistency between the first common image 901 and the second common image 902 is not observed.

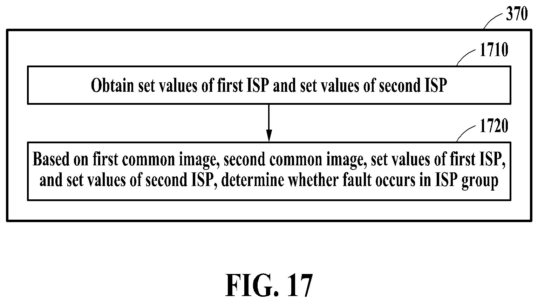

According to an embodiment, the consistency between the first common image 901 and the second common image 902 may decrease due to the difference between set values of the first ISP and set values of the second ISP, so the fault detection circuit may determine whether a fault occurs in the ISP group including the first ISP and the second ISP, based on the set values of the first ISP and the set values of the second ISP. A method of determining, based on the set values of a first ISP and the set values of a second ISP, whether a fault occurs in an ISP group including the first ISP and the second ISP is described in detail below with reference to FIG. 17.

As the first boundary region 911 is removed from the first partial image 501 and the second boundary region 921 is removed from the second partial image 502, the values of inaccurate pixels may be excluded from the first common image 901 and the second common image 902.

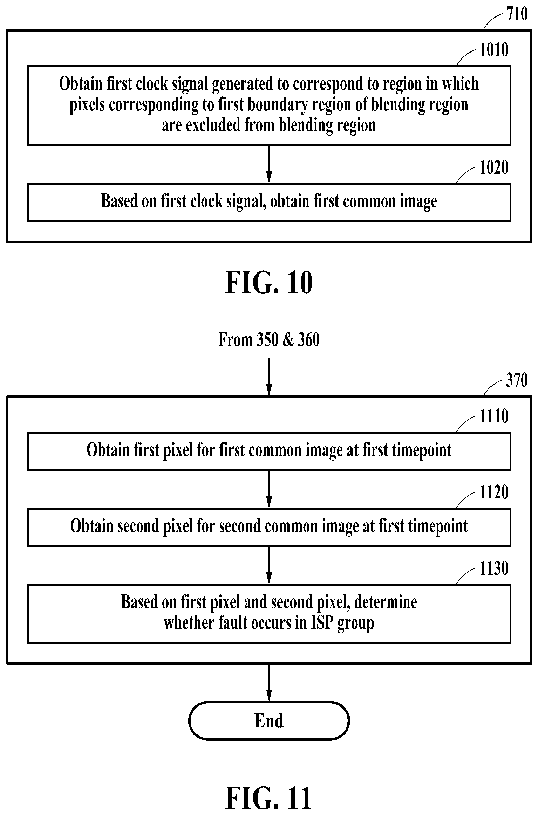

FIG. 10 is a flowchart of a method by which a fault detection circuit obtains a common image, according to an embodiment.

According to an embodiment, operations 1010 and 1020 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 810 described above with reference to FIG. 8 may include operations 1010 and 1020.

In operation 1010, the fault detection circuit may obtain a first clock signal generated to correspond to a region where pixels corresponding to a first boundary region of a blending region of a first partial image are excluded from the blending region. For example, when the first ISP sequentially outputs the lines of the first partial image, the first clock signal may be a clock signal activated to allow the fault detection circuit to obtain pixels corresponding to the blending region from which pixels corresponding to a first boundary region among pixels of each line are excluded. The first clock signal may be generated by a phase-locked loop (PLL).

In operation 1020, the fault detection circuit may obtain a first common image based on the first clock signal. For example, the fault detection circuit may obtain the first common image by obtaining a portion of the first partial image corresponding to an interval during which the first clock signal is activated.

The description of operation 820 of obtaining the second common image described above with reference to FIG. 8 may similarly apply to the description of operations 1010 and 1020. The fault detection circuit may obtain a second clock signal generated to correspond to a region where pixels corresponding to a second boundary region of a blending region of a second partial image are excluded from the blending region.

According to an embodiment, when the timepoint at which the first ISP outputs the pixels corresponding to the first common image is the same as the timepoint at which the second ISP outputs the pixels corresponding to the second common image, the timing of the first clock signal may be the same as the timing of the second clock signal. When the timing of the first clock signal is the same as the timing of the second clock signal, the fault detection circuit may determine whether a fault occurs in the ISP group based on pixels obtained at the same timepoint.

According to an embodiment, when the timepoint at which the first ISP outputs the pixels corresponding to the first common image differs from the timepoint at which the second ISP outputs the pixels corresponding to the second common image, the timing of the first clock signal may not be the same as the timing of the second clock signal. In this case, the fault detection circuit may determine whether a fault occurs in the ISP group by either comparing cyclic redundancy check (CRC) codes of the pixels or using a line buffer.

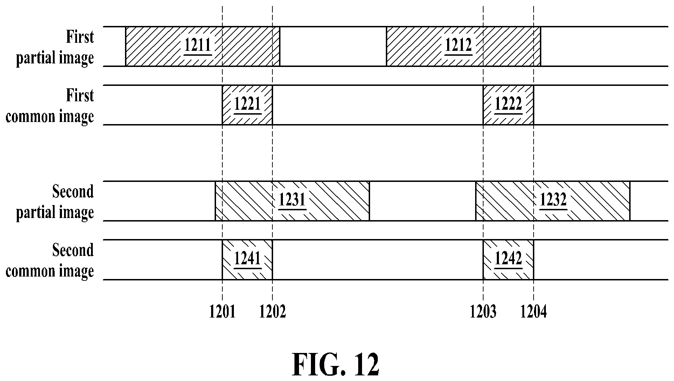

FIG. 11 is a flowchart of a method of determining, based on a pixel obtained at the same timepoint, whether a fault occurs in an ISP group, according to an embodiment. FIG. 12 illustrates a flow of a first partial image, a first common image, a second partial image, and a second common image, according to an embodiment.

According to an embodiment, operations 1110 to 1130 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG> 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 370 described above with reference to FIG. 3 may include operations 1110 to 1130.

As illustrated in FIG. 12, as timepoints 1201 and 1203 at which the first ISP outputs pixels 1221 and 1222 corresponding to the first common image are the same as the timepoints 1201 and 1203 at which the second ISP outputs pixels 1241 and 1242 corresponding to the second common image, the timing of a first clock signal may be the same as the timing of a second clock signal. The fault detection circuit may determine whether a fault occurs in an ISP group by comparing pixels obtained from the first partial image with pixels obtained from the second partial image at the same timepoint.

In operation 1110, the fault detection circuit may obtain a first pixel for the first common image at a first timepoint. For example, the fault detection circuit may obtain an n-th pixel among pixels 1211 corresponding to a first line of the first partial image at the first timepoint as one of the pixels 1221 corresponding to a first line of the first common image.

In operation 1120, the fault detection circuit may obtain a second pixel for the second common image at the first timepoint. For example, the fault detection circuit may obtain an m-th pixel among pixels 1231 corresponding to a first line of the second partial image at the first timepoint as one of the pixels 1241 corresponding to a first line of the second common image.

In operation 1130, the fault detection circuit may determine whether a fault occurs in the ISP group based on the first pixel and the second pixel. Since the timepoints 1201 and 1203 at which the first ISP outputs the pixels 1221 and 1222 corresponding to the first common image are the same as the timepoints 1201 and 1203 at which the second ISP outputs the pixels 1241 and 1242 corresponding to the second common image, the first pixel and the second pixel may represent the same point. For example, the n-th pixel among the pixels 1211 corresponding to the first line of the first partial image obtained at the first timepoint and the m-th pixel among the pixels 1231 corresponding to the first line of the second partial image may represent the same point. When the value of the first pixel is not the same as the value of the second pixel, the fault detection circuit may detect that a fault occurs in at least one of the first ISP or the second ISP. The fault detection circuit may compare the pixels included in the first common image with the pixels included in the second common image on a one-to-one basis in real time.

According to an embodiment, the fault detection circuit may determine whether a fault occurs in the ISP group for each line by comparing the first pixels 1221 included in the first line of the first common image with the second pixels 1241 included in the first line of the second common image. For example, as a result of a one-to-one comparison between the first pixels 1221 included in the first line of the first common image and the second pixels 1241 included in the first line of the second common image, when the proportion of pairs in which the first pixels and the second pixels have the same values among pairs of the first pixels and the second pixels corresponding to the first pixels is less than or equal to a preset reference value, it may be determined that a fault occurs in the ISP group.

According to an embodiment, each of the first ISP and the second ISP may adjust the timepoint at which the first partial image or the second partial image is output. Depending on the method by which a raw image signal is processed in each of the first ISP and the second ISP, there may be a difference between the timepoint at which the first partial image is generated and the timepoint at which the second partial image is generated. However, since the first ISP and the second ISP may adjust the timepoint at which the first partial image is output and the timepoint at which the second partial image is output, respectively, the timepoint at which the first ISP outputs pixels corresponding to the first common image may be set to be the same as the timepoint at which the second ISP outputs pixels corresponding to the second common image.

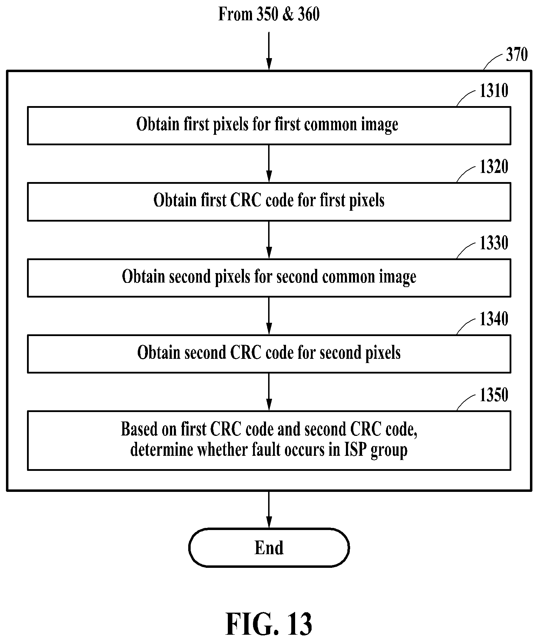

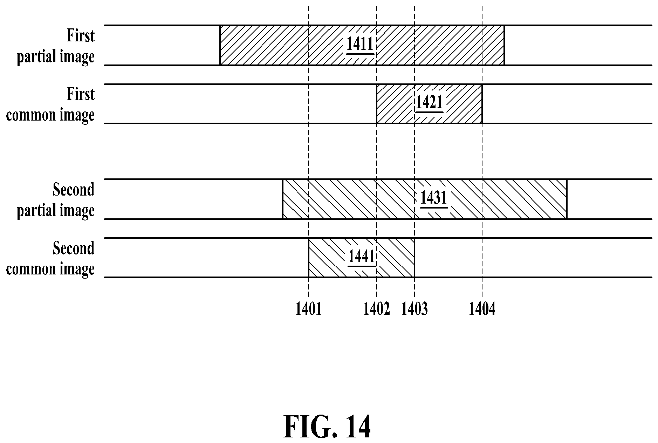

FIG. 13 is a flowchart of a method of determining, based on a CRC code, whether a fault occurs in an ISP group, according to an embodiment. FIG. 14 illustrates a flow of a first partial image, a first common image, a second partial image, and a second common image, according to an embodiment.

According to an embodiment, operations 1310 to 1350 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 370 described above with reference to FIG. 3 may include operations 1310 to 1350.

In operation 1310, the fault detection circuit may obtain first pixels for a first common image. For example, the fault detection circuit may obtain first pixels 1421 from a first timepoint 1402 to a second timepoint 1404 in response to the timepoint at which the pixels corresponding to the first common image are output among pixels 1411 corresponding to the first line of a first partial image.

In operation 1320, the fault detection circuit may obtain a first CRC code for the first pixels. For example, the first CRC code may be a remainder that is obtained by converting the pixel values for the first pixels into a byte array and performing division on the byte array according to a predetermined polynomial. The first CRC code may be used as a unique identifier for the array of pixel values included in the first pixels.

In operation 1330, the fault detection circuit may obtain second pixels for a second common image. For example, the fault detection circuit may obtain second pixels 1441 from a third timepoint 1401 to a fourth timepoint 1403 in response to the timepoint at which the pixels corresponding to the second common image are output among pixels 1431 corresponding to the first line of a second partial image.

In operation 1340, the fault detection circuit may obtain a second CRC code for the second pixels. The second CRC code may be used as a unique identifier for the array of pixel values included in the second pixels.

In operation 1350, the fault detection circuit may determine whether a fault occurs in an ISP group based on the first CRC code and the second CRC code. Since the first CRC code and the second CRC code are uniquely determined corresponding to the arrays of pixel values included in the first pixels and the second pixels, respectively, when the first CRC code appears to be identical to the second CRC code, it may be determined that no fault occurs in the ISP group. On the other hand, when the first CRC code does not appear to be identical to the second CRC code, it may be determined that a fault occurs in the ISP group.

By generating and comparing unique identifiers (the first CRC code and the second CRC code) corresponding to the first pixels and the second pixels, it may be possible to compress the large volume of first and second pixels and determine the consistency between the first common image and the second common image. Additionally, the consistency between the first common image and the second common image, which are output at different timepoints, may be determined.

According to an embodiment, the fault detection circuit may calculate a first secure hash algorithm (SHA) hash and a second SHA hash for the first pixels and the second pixels and determine whether a fault occurs in the ISP group based on the first SHA hash and the second SHA hash. The type of fault detection algorithm is not limited to the examples described above, and various fault detection algorithms may be used as long as the fault detection algorithms may determine a unique identifier corresponding to the array of pixel values included in the first and second pixels.

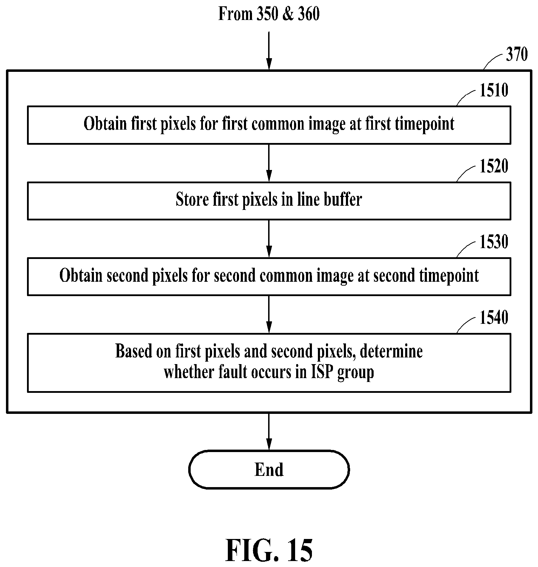

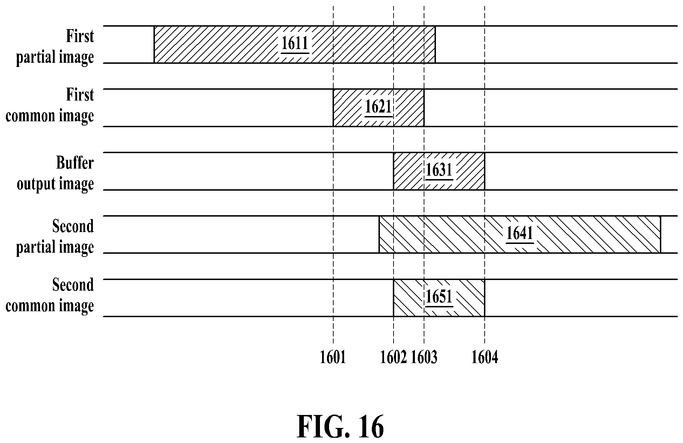

FIG. 15 is a flowchart of a method of determining whether a fault occurs in an ISP group using a line buffer, according to an embodiment. FIG. 16 is a flow of a first partial image, a first common image, a second partial image, a second common image, and a buffer output image, according to an embodiment.

According to an embodiment, operations 1510 to 1540 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 370 described above with reference to FIG. 3 may include operations 1510 to 1540.

In operation 1510, the fault detection circuit may obtain first pixels for a first common image at a first timepoint. For example, the fault detection circuit may obtain first pixels 1621 from a first timepoint 1601 to a second timepoint 1603 in response to the timepoint at which the pixels correspond to the first common image among pixels 1611 corresponding to a first line of a first partial image.

In operation 1520, the fault detection circuit may store the first pixels in a line buffer. For example, the fault detection circuit may store the first pixels 1621 in the line buffer from the first timepoint 1601 to the second timepoint 1603.

In operation 1530, the fault detection circuit may obtain second pixels for a second common image at a second timepoint. For example, the fault detection circuit may obtain second pixels 1651 from a third timepoint 1602 to a fourth timepoint 1604 in response to the timepoint at which the pixels correspond to the first common image among pixels 1641 corresponding to a first line of a second partial image.

According to an embodiment, the fault detection circuit may store the second pixels in the line buffer. For example, the fault detection circuit may store the second pixels 1651 in the line buffer from the third timepoint 1602 to the fourth timepoint 1604.

In operation 1540, the fault detection circuit may determine whether a fault occurs in an ISP group based on the first pixels and the second pixels. By adjusting the output timepoint of pixels 1631 stored in the line buffer to match the acquisition timepoint of the second common image, a first pixel output from a buffer at the second timepoint and a second pixel obtained from the second common image may represent the same point. When the value of the first pixel is not the same as the value of the second pixel, the fault detection circuit may detect that a fault occurs in at least one of the first ISP or the second ISP. The fault detection circuit may perform a one-to-one comparison of pixels included in the first common image and pixels included in the second common image.

According to an embodiment, the fault detection circuit may determine whether a fault occurs in the ISP group for each line by comparing the pixels 1631 stored in the line buffer with the second pixels 1651 included in the first line of the second common image. For example, as a result of performing a one-to-one comparison between the pixels 1631 stored in the line buffer and the second pixels 1651 included in the first line of the second common image, when the proportion of pairs where values of first pixels are the same as values of second pixels among pairs of first pixels and second pixels corresponding to the first pixels is less than or equal to a predetermined threshold value, it may be determined that a fault occurs in the ISP group.

When the capacity of the line buffer is low, the line buffer may temporarily store only pixels corresponding to the first line of the first common image. After these pixels are output during the acquisition timepoint of the second common image (from the third timepoint 1602 to the fourth timepoint 1604), the line buffer may be cleared. After the line buffer is cleared, pixels corresponding to the second line of the first common image may be temporarily stored in the line buffer.

FIG. 17 is a flowchart of a method of determining, based on set values of a plurality of ISPs, whether a fault occurs in an ISP group, according to an embodiment.

According to an embodiment, operations 1710 and 1720 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 370 described above with reference to FIG. 3 may include operations 1710 and 1720.

Various parameter values for processing a raw image signal and generating an optimized image may be configured in an ISP. These parameter values may be stored (or configured) in a plurality of registers included in the ISP. For example, the ISP may include registers that store values respectively corresponding to an exposure time, a gain, and an international organization for standardization (ISO) setting in relation to exposure information of an image. For example, the ISP may include registers respectively corresponding to a red gain, a green gain, and a blue gain in relation to white balance information of an image. For example, the ISP may include registers respectively corresponding to a color correction matrix (e.g., requiring 9 registers for a 3x3 matrix), hue adjustment, and saturation adjustment in relation to color correction information of an image.

In operation 1710, the fault detection circuit may obtain set values of the first ISP and the second ISP. For example, the set values of the first ISP and the second ISP may be at least one of a plurality of register values corresponding to each of the first ISP and the second ISP. When a plurality of register values for the first ISP differs from a plurality of register values for the second ISP, a first partial image and a second partial image are generated based on different parameters. As a result, the consistency between a first common image and a second common image may decrease.

In operation 1720, the fault detection circuit may determine whether a fault occurs in the ISP group based on the first common image, the second common image, the set values of the first ISP, and the set values of the second ISP. For example, when the first common image is corrected considering the set values of the first ISP, and the second common image is corrected considering the set values of the second ISP, and the resulting difference between the first common image and the second common image is due to the difference between the set values of the first ISP and the set values of the second ISP, it may be determined that no fault occurs in the ISP group.

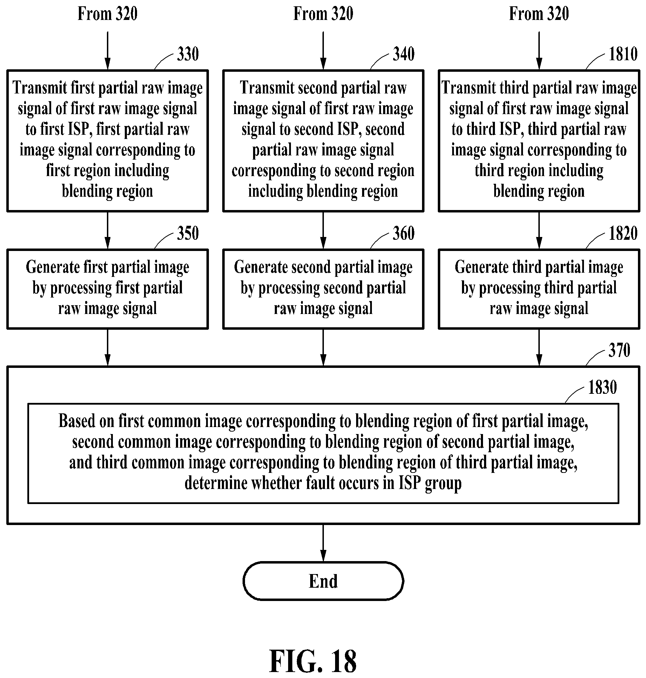

FIG. 18 is a flowchart of a method of detecting an ISP fault, performed by an image processing device including three or more ISPs, according to an embodiment.

According to an embodiment, operations 1810 to 1830 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operations 1810 and 1820 may be performed after operation 320 described above with reference to FIG. 3 is performed. For example, operation 370 described above with reference to FIG. 3 may include operation 1830.

According to an embodiment, the image processing device may further include a third ISP that generates a third partial image signal by processing a third partial raw image signal.

In operation 1810, the split circuit may transmit, to the third ISP, the third partial raw image signal of the first raw image signal, the third partial raw image signal corresponding to a third region. For example, the third region may be determined to include at least a portion of an overlapping blending region between a first region and a second region. For example, the third region may be determined to share a separate blending region with the first region or the second region.

In operation 1820, the third ISP may generate a third partial image by processing the third partial raw image signal. For example, the third ISP generate the third partial image having an RGB or YUV color space by processing the third partial raw image signal.

In operation 1830, based on a first common image corresponding to a blending region of a first partial image, a second common image corresponding to a blending region of a second partial image, and a third common image corresponding to a blending region of the third partial image, the fault detection circuit may determine whether a fault occurs in an ISP group. For example, the method by which the fault detection circuit determines whether a fault occurs in the ISP group, as described above with reference to FIGS. 8 to 17, may be similarly modified and applied.

Even when the image processing device includes four or more ISPs, the operations of the split circuit, the plurality of ISPs, and the fault detection circuit may be similarly modified and applied.

FIG. 19 is a flowchart of a method of controlling an operation of a split circuit depending on whether a fault occurs in a third ISP, according to an embodiment.

According to an embodiment, operations 1910 to 1940 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a third ISP, a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 1830 described above with reference to FIG. 18 may include operations 1910 and 1920. For example, operations 1930 and 1940 may be performed after operation 1830 described above with reference to FIG. 18 is performed.

In operation 1910, the fault detection circuit may determine a fault image based on a first common image, a second common image, and a third common image. For example, when the first common image, the second common image, and the third common image all include an overlapping region, an image that shows a pixel value that is different from the other two common images in a corresponding region may be determined as the fault image. For example, the first common image may overlap a portion of the second common image in a first blending region, while a portion of the second common image may overlap the third common image in a second blending region. In this example, when no inconsistency is found between the first common image and the portion of the second common image in the first blending region, but inconsistency is detected between the portion of the second common image and the third common image in the second blending region, the consistency in the first blending region may be used to determine that the first common image and the second common image are normal images. Consequently, the third common image may be determined as a fault image.

In operation 1920, the fault detection circuit may determine an ISP that generates the fault image as an ISP in which a fault occurs.

In operation 1930, when it is determined that a fault occurs in the third ISP, the split circuit may transmit, to the first ISP, a first partial raw image signal of the first raw image signal, the first partial raw image signal corresponding to at least a portion of the first region and the third region. By assigning at least a portion of a raw image signal that is processed by an ISP in which a fault occurs to a normally operating ISP, the image processing device including the plurality of ISPs may continuously process the raw image signal.

In operation 1940, when it is determined that a fault occurs in the third ISP, the split circuit may transmit, to the second ISP, a second partial raw image signal of the first raw image signal, the second partial raw image signal corresponding to at least a portion of the second region and the third region. By assigning at least a portion of the raw image signal that is processed by the ISP in which a fault occurs to a normally operating ISP, the image processing device may continuously process the raw image signal.

According to an embodiment, when it is determined that a fault occurs in the third ISP, the split circuit may redetermine the first region and the second region. As the raw image signal received by the image processing device is redistributed to normally operating ISPs, an image corresponding to the raw image signal may be generated.

According to an embodiment, when it is determined that a fault occurs in the third ISP, the split circuit may lower the resolution of the raw image signal and generate a first partial raw image signal and a second partial raw image signal for the raw image signal of which the resolution is lowered. For example, the split circuit may reduce the amount of data included in the raw image signal by sub-sampling the raw image signal. For example, when the resolution of the image represented by the raw image signal before sub-sampling is 1280x720 (HD), the resolution of the image represented by the raw image signal after sub-sampling may be 640x720 (with a sub-sampling factor of 2). When the remaining normally operating ISPs process the raw image signal as faults occur in some of the plurality of ISPs included in the ISP group, the amount of data included in the raw image signal may exceed the amount of data that the normally operating ISPs may handle. Therefore, the amount of data in the raw image signal may be reduced so that an image corresponding to the raw image signal may be generated in real time.

Even when an ISP in which a fault occurs is not the third ISP but at least one of the ISPs in the ISP group, such as the first ISP or the second ISP, the operation of the split circuit may similarly be modified and applied.

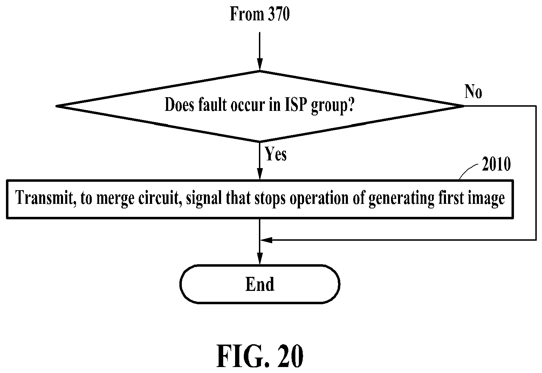

FIG. 20 is a flowchart of a method of controlling an operation of a merge circuit depending on whether a fault occurs in an ISP group, according to an embodiment.

According to an embodiment, operation 2010 may be performed by an image processing device (e.g., the image processing device 120 of FIGS. 1 and 2). The image processing device may include an input interface (e.g., the input interface 210 of FIG. 2), a split circuit (e.g., the split circuit 220 of FIG. 2), a first ISP (e.g., the first ISP 230 of FIG. 2), a second ISP (e.g., the second ISP 240 of FIG. 2), a merge circuit (e.g., the merge circuit 250 of FIG. 2), a fault detection circuit (e.g., the fault detection circuit 260 of FIG. 2), and an output interface (e.g., the output interface 270 of FIG. 2). For example, operation 2010 may be performed after operation 370 described above with reference to FIG. 3 is performed.

In operation 2010, when it is determined that a fault occurs in an ISP group, the fault detection circuit may transmit, to the merge circuit, a signal that stops an operation of generating a first image. Through operation 2010, the image processing device may prevent an image in which a fault occurs from being output.

The methods according to the embodiments described herein may be recorded in non-transitory computer-readable media including program instructions to implement various operations of the embodiments. The media may also include, alone or in combination with the program instructions, data files, data structures, and the like. The program commands recorded on the above medium may be specially designed and configured for the embodiment or may be known and available to those skilled in the art of computer software. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specifically configured to store and perform program instructions, such as ROM, random access memory (RAM), flash memory, and the like. Examples of program instructions include both machine code, such as produced by a compiler, and files containing higher-level code that may be executed by the computer using an interpreter. The hardware devices described above may be configured to act as one or more software modules in order to perform the operations of the embodiments, or vice versa.

Software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

Although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. A method of determining an image signal processor (ISP) fault, performed by an image processing device, the method comprising:
receiving, by a split circuit, a first raw image signal that is at least a portion of an image signal captured by an image sensor of a first camera;
determining, by the split circuit, a blending region for the first raw image signal;
transmitting, by the split circuit, a first partial raw image signal of the first raw image signal to a first ISP, the first partial raw image signal corresponding to a first region comprising the blending region;
transmitting, by the split circuit, a second partial raw image signal of the first raw image signal to a second ISP, the second partial raw image signal corresponding to a second region comprising the blending region;
generating, by the first ISP, a first partial image by processing the first partial raw image signal;
generating, by the second ISP, a second partial image by processing the second partial raw image signal; and
determining, by a fault detection circuit, based on a first common image corresponding to the blending region of the first partial image and a second common image corresponding to the blending region of the second partial image, whether a fault occurs in an ISP group comprising the first ISP and the second ISP.

2. The method of claim 1, wherein the determining of whether the fault occurs in the ISP group comprises:
obtaining the first common image by excluding, from the blending region, pixels corresponding to a first boundary region of the blending region in the first partial image;
obtaining the second common image by excluding, from the blending region, pixels corresponding to a second boundary region of the blending region in the second partial image; and
based on the first common image and the second common image, determining whether a fault occurs in the ISP group.

3. The method of claim 2, wherein the obtaining of the first common image by excluding, from the blending region, the pixels corresponding to the first boundary region of the blending region in the first partial image comprises:
obtaining a first clock signal generated to correspond to a region in which the pixels corresponding to the first boundary region of the blending region are excluded from the blending region; and
based on the first clock signal, obtaining the first common image.

4. The method of claim 1, wherein the determining of whether the fault occurs in the ISP group comprises:
obtaining a first pixel for the first common image at a first timepoint;
obtaining a second pixel for the second common image at the first timepoint; and
based on the first pixel and the second pixel, determining whether the fault occurs in the ISP group.

5. The method of claim 1, wherein the determining of whether the fault occurs in the ISP group comprises:
obtaining first pixels for the first common image;
obtaining a first cyclic redundancy check (CRC) code for the first pixels;
obtaining second pixels for the second common image;
obtaining a second CRC code for the second pixels; and
based on the first CRC code and the second CRC code, determining whether the fault occurs in the ISP group.

6. The method of claim 1, wherein the determining of whether the fault occurs in the ISP group comprises:
obtaining first pixels for the first common image at a first timepoint;
storing the first pixels in a line buffer;
obtaining second pixels for the second common image at a second timepoint; and
based on the first pixels and the second pixels, determining whether the fault occurs in the ISP group.

7. The method of claim 1, wherein the determining of whether the fault occurs in the ISP group comprises:
obtaining, by the fault detection circuit, set values of the first ISP and set values of the second ISP; and
determining, by the fault detection circuit, based on the first common image, the second common image, the set values of the first ISP, and the set values of the second ISP, whether the fault occurs in the ISP group.

8. The method of claim 1, further comprising:
transmitting, by the split circuit, a third partial raw image signal of the first raw image signal to a third ISP, the third partial raw image signal corresponding to a third region comprising the blending region; and
generating, by the third ISP, a third partial image by processing the third partial raw image signal, and
wherein the determining of whether the fault occurs in the ISP group comprises:
determining, by the fault detection circuit, based on the first common image corresponding to the blending region of the first partial image, the second common image corresponding to the blending region of the second partial image, and a third common image corresponding to the blending region of the third partial image, whether the fault occurs in the ISP group.

9. The method of claim 8, wherein the determining of whether the fault occurs in the ISP group, by the fault detection circuit, based on the first common image, the second common image, and the third common image comprises:
based on the first common image, the second common image, and the third common image, determining a fault image; and
determining an ISP that generates the fault image as an ISP in which a fault occurs.

10. The method of claim 9, further comprising:
when the third ISP is determined as the ISP in which the fault occurs,
transmitting, by the split circuit, a first partial raw image signal of the first raw image signal to the first ISP, the first partial raw image signal corresponding to at least a portion of the first region and the third region; and
transmitting, by the split circuit, a second partial raw image signal of the first raw image signal to the second ISP, the second partial raw image signal corresponding to at least a portion of the second region and the third region.

11. The method of claim 1, wherein a size of the blending region for the first raw image signal is different from a size of a previous blending region for a previous raw image signal.

12. The method of claim 1, further comprising:
obtaining, by a merge circuit, the first partial image and the second partial image; and
generating, by the merge circuit, based on the first partial image and the second partial image, a first image corresponding to the first raw image signal.

13. A non-transitory computer-readable storage medium storing instructions that, when executed by a processor, cause the processor to perform the method of claim 1.

14. An image processing device comprising:
a split circuit configured to receive a first raw image signal that is at least a portion of an image signal captured by an image sensor of a first camera, determine a blending region for the first raw image signal, transmit a first partial raw image signal of the first raw image signal to a first ISP, the first partial raw image signal corresponding to a first region comprising the blending region, and transmit a second partial raw image signal of the first raw image signal to a second ISP, the second partial raw image signal corresponding to a second region comprising the blending region;
the first ISP configured to generate a first partial image by processing the first partial raw image signal;
the second ISP configured to generate a second partial image by processing the second partial raw image signal; and
a fault detection circuit configured to determine whether a fault occurs in an ISP group comprising the first ISP and the second ISP, based on a first common image corresponding to the blending region of the first partial image and a second common image corresponding to the blending region of the second partial image.

15. The image processing device of claim 14, wherein the fault detection circuit is configured to store a first line of the first common image and a second line of the second common image by using a line buffer and determine, based on the first line and the second line, whether a fault occurs in the ISP group.
